# EUROPEAN PATENT SPECIFICATION

(11) **EP 2 892 322 B1**
(45) Date of publication and mention of the grant of the patent: **01.05.2019**
(21) Application number: 13756724.4
(22) Date of filing: 08.08.2013
(51) Int. Cl.: A01J 5/017, A01K 1/12

(54) **MILKING ROBOT**
MELKROBOTER
ROBOT DE TRAITE

(30) Priority: 04.09.2012 NL 2009409
(43) Date of publication of application: 15.07.2015
(73) Proprietor: Lely Patent N.V., 3147 PB Maassluis (NL)
(72) Inventor: KRAGTEN, Gerrit Augustinus, 3147 PA Maassluis (NL)
(74) Representative: Octrooibureau Van der Lely N.V.
(86) International application number: PCT/NL2013/050588
(87) International publication number: WO 2014/038933

(56) References cited:
- EP-A1- 0 350 558
- EP-A1- 0 717 926
- WO-A1-2012/087233
- WO-A2-2011/098994
- US-B1- 6 213 051

## Description

The invention relates to a milking robot for performing automatic milking operations on a dairy animal. Such milking robots are well-known in the dairy industry.

A milking robot, such as known from document WO2012/087233, is usually installed inside the animal barn in which the milking animals are housed, or even outside in a pasture, provided with only minimal protection. While the shelter usually provided to the milking robot is oftentimes sufficient, there are occasions where more protection is needed to make certain that the performance of the milking robot is not adversely affected in certain environmental conditions. For example, the robot arm used for automatic attachment of the teat cups may be damaged by dirt or grime in windy or drafty conditions, and the tubing for transport of fluids on the robot arm may even freeze in temperatures below zero, which would severely affect the milking robot's proper performance.

An object of the invention is to reduce the problem of the previously known milking robots and to provide a milking robot in which the milking robot itself is less vulnerable to outward influences.

This object is achieved by the milking robot of claim 1, in particular by a milking robot comprising a milking area for receiving an animal to be milked, teat cups and a robot arm for attachment of the teat cups to the teats of the animal in said milking area, the robot arm being movable between an active position for the attachment of the teat cups to the teats of the animal wherein the robot arm is, at least partly, inside the milking area, and an inactive position where the robot arm is outside the milking area in an arm storage area, situated behind or to the side of the milking area, wherein the milking robot is further provided with a controllable screening element that is automatically movable between a first open position and a second closed position in which the element screens off the arm storage area, with the robot arm (2) no longer protruding into the milking area (A), from the milking area more than in the open position. With this, it can be assured that even when the environmental conditions are such that they would normally affect the performance of the milking robot in a negative way, the milking robot is now in fact protected from these conditions and will be less affected, or even unaffected by these conditions. This ensures a proper working performance of the milking robot under normally difficult environmental conditions. Also, it may prevent damage to the milking robot, as tubes and conduits in and on the milking robot, and in particular in and on the robot arm may freeze up when the temperature comes below zero, thereby damaging the tubes and conduits sometimes to the point that they need to be replaced before the milking robot can work properly again. The present invention prevents this, by providing a screen between the milking area where a milking animal resides as it is being milked, and the area in which the robot equipment resides when it is not in operation or between milking operations. This arm storage area is, according to the invention, situated behind or to the side of the milking area. The invention limits exposure to the environment only during the minimal time period possible, i.e. during actually performing the milking operation. Note that during milking, most tubes are filled with warm liquid.

As a milking animal enters the milking robot to present itself for milking, the screening element between the milking area and the arm storage area will be in the closed position in which it effectively screens off the arm storage area from the milking area. This screening off or shielding prevents environmental conditions from affecting the performance of the milking robot and the robot arm negatively by at least reducing or possibly even eliminating some of these conditions, as the screening off lessens or eliminates these effects. The milking area is usually open to environmental conditions, and not protected by any means on the robot itself because it is advantageous for the animal to maintain in contact with the herd. The screen is then moved to the open position to allow the robot arm unhindered access to the milking area so that the teat cups may be automatically attached to the teats of the milking animal. This automatic attachment can be done in a known way and shall not be explained any further. The robot arm remains within the milking area until the milking operation is finished and is retracted into the arm storage area, after which the screen is once again moved into the closed position to screen off the arm storage area from the milking area.

It is to be noted that the screening off in the closed position may also mean that the screen is partly closing off the arm storage area, not completely. In some environmental conditions, this partial screening off may be sufficient to prevent the milking robot to be negatively affected.

It is noted that European patent publication EP1611783 A1 discloses a milking robot for automatically milking animals, which animals are free to visit the milking robot at their leisure. The animals are furthermore screened off from ambient stimuli by a screen to prevent the animal and thus the milking operation from being negatively affected by ambient stimuli, such as other animals in the vicinity of the milking robot. However, the milking robot itself is not protected in any way.

It is furthermore noted that WO2011/098994 discloses a rotary milking device with an opening in the platform for passing teat cups, and with closure means for closing the opening and spreading the animal's legs.

Embodiments of the invention are described in the dependent claims as well as hereinbelow.

In a particular embodiment according to the invention, the screening element comprises an element actuator for moving the screening element between the first open position and the second closed position and vice versa. The actuator may be a known type of actuator, such as a hydraulic or pneumatic cylinder. The screening element is then able to be moved between the open and closed positions. The screening element may also be moved by gravity. This effect is obtained when, for instance, the screening element is moved into a first or second position by the actuator, and moved into a first or second position by deenergizing the actuator and allowing gravity to work as an actuator on the screen. It will be clear that the screening element can be actuated from the open to the closed position and vice versa, by using an actuator such as a cylinder, or by allowing gravity to work as an actuator for at least part of the movement between the open and the closed position. Of course, it depends on the type of screening element used and the way the screening element is mounted whether the actuation by gravity is possible, as not all types of screening element or the way they are mounted are suited for this, as some screening elements do not move in a way that gravity can actuate it between the open and the closed position.

In another particular embodiment according to the invention, the screening element comprises one of a curtain, a screen or a roller blind. These screen types may be mounted in various ways, such as vertically or horizontally. When the screen is mounted vertically, the movement between the open and closed position is substantially horizontal, from left to right and vice versa. When the screen is mounted horizontally, the movement between the open and closed position is substantially vertical, from top to bottom and vice versa. A curtain may be a normal curtain or a strip or flap curtain or the like. A screen may be a screen that can be moved away in its entirety or segmented like an overhead door. A roller blind may be any known type of roller blind, but also a roman shade or the (follows page 4) like. It should be understood that any kind of screening may be used, and that the above examples are not intended to limit the invention.

In another particular embodiment according to the invention, the milking robot comprises a plurality of controllable screening elements. This allows for a flexible arrangement of the screening elements, as it provides for more than one type of movement of the screening elements at a time. Furthermore, it provides for more freedom to the extent in which the arm storage area is to be screened off from the milking area, as it is possible to move the plurality of screening elements independently from each other, and thereby controlling the position of each of the screening elements between the open and closed position. For example, the first screening element may be in the fully closed position, while the others may be in the open position or somewhere in between the open and closed position. This is particularly advantageous when the environmental conditions are very prone to fluctuating, for example when the milking robot is located somewhere the climate is unstable and the temperature and weather changes often.

In another particular embodiment according to the invention, the milking robot comprises an entry gate for allowing an animal to enter the milking area, wherein the entry gate is operatively connected to the screening element for moving the screening element between the open and closed position in dependence on the position of the entry gate. The position of the gate can thus dictate the position of the screening element. When the gate is open, no milking operation will be performed inside the milking area. It is desirable for the screening element to be in the closed position when the entry gate is open, as the robot arm will then be located inside the arm storage area in its entirety, and it will not protrude into the milking area. The screening element effectively screens off the arm storage area, with the robot arm inside it, and when the milking area is exposed to environmental conditions, the screening element effectively screens off the arm storage area from the environmental conditions. As soon as the entry gate is closed, which means an animal is then present inside the milking area for milking, the screening element is moved from the closed to the open position to allow the robot arm into the milking area to perform milking operations. When the milking operation is finished, or interrupted, the robot arm is moved back out of the milking area and into the arm storage area, and the animal is allowed to exit and the entry gate opens again to allow the next milking animal inside the milking area. This opening of the entry gate may then provide for the screening element to be moved from the open to the closed position to screen off the arm storage area from the milking area. It is also possible to move the screening element directly after the robot arm moves out of the milking area.

In a further particular embodiment according to the invention, the milking robot further comprises a mechanical coupling between the entry gate and the screening element. By providing a mechanical coupling between the screening element and the entry gate, no other control means are necessary to move the screening element to a position dependent on the position of the entry gate. This makes for a minimal chance of malfunction of the positioning of the screening element with regard to the position of the entry gate. It also ensures that the screening element can not mistakenly remain in the closed position when the entry gate is closed, as the mechanical coupling does not allow for that kind of error. Situations where the milking area is occupied by an animal to be milked but the robot arm is prevented from protruding into the milking area by a still closed screening element, or vice versa when the milking area is unoccupied and the screening element is still in the open position and not screening off the arm storage area, will not occur.

In a particular embodiment according to the invention, the milking robot comprises a control system operatively connected to the element actuator and arranged to control the element actuator for movement of the screening element. This allows for more flexibility in when it is desired for the screening element to be effective. A milking robot may be placed in a location where the climate is very balanced and the temperature rarely drops below zero. As such, the danger of the tubes and conduits of the milking robot being damaged by freezing will only occur a few times a year, and maybe even only in a certain time period of the year. It is then possible to let the control system control when the screening element should be actuated to screen off the arm storage area. For example, it is known that in a certain part of the world, the temperature only drops below zero for 2 weeks during a time window of approximately 2 months, the control system can be programmed to control the screening element and to operate the screen to screen off the arm storage area only during that period of time. The rest of the year, when there is no danger of the performance of the milking robot being negatively affected by the environmental conditions, the screening element will remain in the open position, and will not be actuated into the closed position. This way, the components of the screening element will wear at a much slower rate, and the durability is improved.

It is also possible for an operator to adjust the control system. The operator can then decide at any point in time when the screening element should be operational. If an unexpected change in the environmental conditions occurs, it is then possible to enter into the control system when and during which period the operator desires the screening element to be operational, and the end point of said period to indicate when the screening off of the arm storage area is no longer necessary. This end point can be effected instantly or delayed, so the operator may indicate a stopping point in the future.

In a further particular embodiment according to the invention, the control system is provided with a gate sensor for generating a gate sensor signal in dependence on a position of the gate, and is arranged for controlling the movement of the screening element in dependence on the gate sensor signal. This operates in a comparable manner to the embodiment where the milking robot comprises a mechanical coupling between the entry gate and the screening element, only in this particular embodiment there is no mechanical coupling to control the movement of the screening element in dependence on the position of the entry gate, but instead the control system controls the movement of the screening element in dependence on the position of the entry gate. Also, another particular advantage of this arrangement is that the time period in which the screening element should be operational can be adjusted e.g. by an operator, unlike with the mechanical coupling between the entry gate and the screening element. This is desirable as it may be unnecessary to have the screening element be operational the entire year, instead the operator can select the time period in which the screening element should be operational.

The gate sensor determines the position of the entry gate, which in turn controls the position of the screening element. The gate sensor may be any kind of sensor which may detect the position of the entry gate, such as a contact, proximity, infrared or magnetic sensor, or other means such as a switch, micro-switch or relay. The control system determines the position of the entry gate by using the output from the entry gate sensor.

In a further particular embodiment according to the invention, the control system is operatively connected to a climate sensor for generating a climate signal in dependence on the climate, and is arranged to control the movement of the screening element in dependence on the climate signal. This provides for an automatic system, in which no human interference is necessary after the initial programming. The climate sensor senses the environmental conditions and the control system compares the measurements of the climate sensor to a threshold value. Said threshold value may be with regard to temperature, wind speed, precipitation or humidity or the like. When the control system determines that a measurement of one or more of the environmental conditions falls below or exceeds its corresponding threshold value, it will then turn the screening element into its operational mode. That way, when the environmental conditions are such that they could negatively affect the performance of the milking robot as determined by the control system, the control system will operate the screening element automatically. Also, there will be less wear on the screening element, as it will only be operational when it is deemed necessary by the control system, in dependence on the measurement of the climate sensor in comparison to the threshold value of the corresponding environmental condition.

The invention shall be explained further using the following nonlimiting figures and embodiments according to the invention, and in which:
Fig. 1 is a perspective front view of an exemplary embodiment of a milking robot according to the invention.
Fig. 2 is a perspective rear view of an exemplary embodiment of a milking robot according to the invention.
Fig. 3 is a rear view of an exemplary embodiment of a milking robot according to the invention.
Fig. 4 is a perspective view of the screening element in a partly closed position.
Fig. 5 is a top view of an exemplary embodiment of a milking robot according to the invention, shown when no animal is present in the milking area.
Fig. 6 is a top view of an exemplary embodiment of a milking robot according to the invention, shown when an animal is present in the milking area.

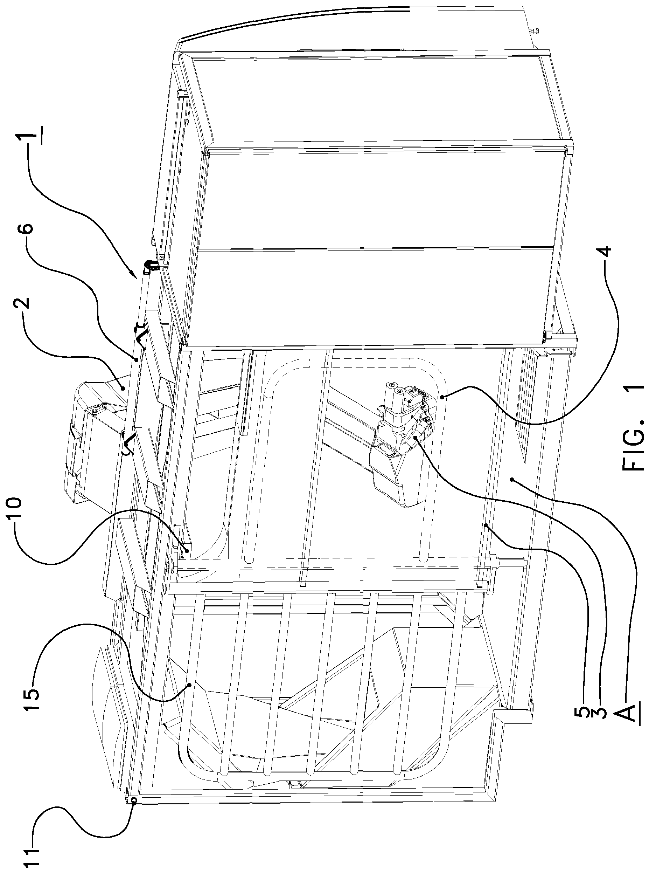

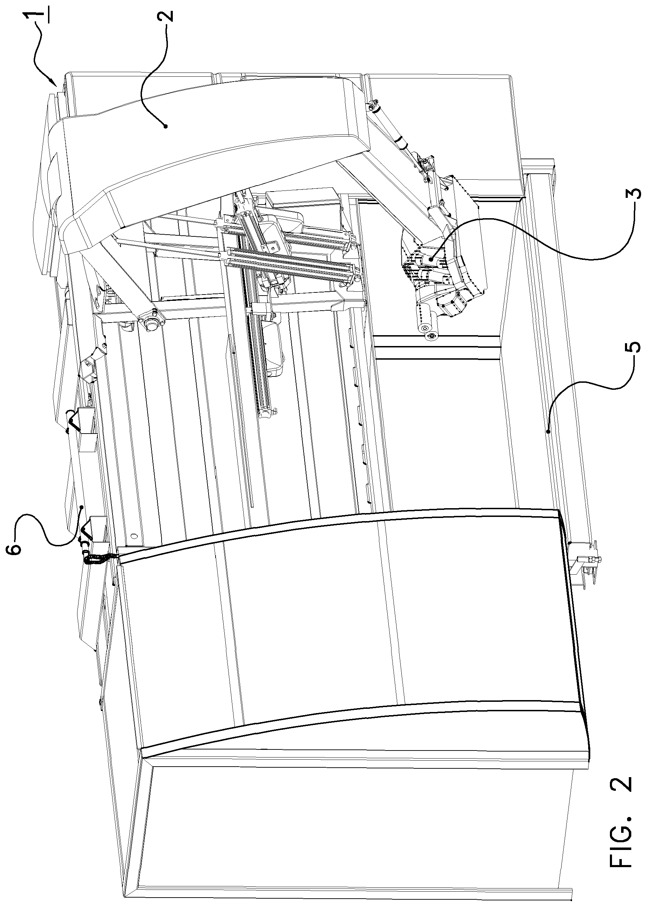

Fig. 1 and 2 show respectively a perspective front view and a perspective back view of a milking robot 1, which is provided with a robot arm 2 for automatically connecting the teat cups 3 to the teats of a dairy animal 8 which is not shown in this figure for increased readability. The milking robot 1 further has an entry gate 4, shown with dashed lines to increase the readability of the figure through which an animal 8 may enter the milking area A of the milking robot 1, and an exit gate 15 through which an animal 8 may exit the milking robot 1. A screening element 5 is shown in a lowered, open position, as actuated by screen actuator 6. An entry gate sensor 10 is provided to determine the position of the entry gate 4. A climate sensor 11 is located on the front of the milking robot 1.

The screening element 5 is constructed in such a way that no sharp parts are present which may injure the animal in case it comes into contact with the screening element 5, for example by leaning against it or even while kicking at it.

The milking robot 1 in fig. 1 and fig.2 is about to perform milking operations on a (non-shown) animal 8. As such, the robot arm 2 is active and protruding, or about to protrude, into the milking area A where the animal 8 is present. The screening element 5 is therefor moved out of the way, which is done by the actuator 6. The actuator 6 may be actively energized to perform the movement of the screening element 5, or it may be de-energized, allowing gravity to pull the screening element 5 down and out of the way.

It should be understood that the screening element 5 may have a top-down bottom-up configuration in order to respectively open and close the screening element 5, or the other way around. Alternatively it may be mounted in an alternative manner, for example by mounting it vertically so the screening element 5 opens and closes from left to right or vice versa.

The actuator 6 may be of any known type, like a hydraulic or pneumatic cylinder. Alternatively, other ways of actuation are possible, such as a motor or energized reel. In fig. 1 it is shown mounted on the top of the milking robot 1, but other locations are also possible. More than one actuator may be used.

The entry gate 4 is shown in the closed position, as an animal 8 (non-shown) is present in the milking area A. An entry gate sensor 10 determines the position of the entry gate 4, whether it is open or closed. The position of the entry gate 4 serves as an easy and clear indication for whether an animal 8 is present in the milking area A or not, which in its turn is an indication that the milking operation will commence shortly after the closing of the entry gate 4. This way, the position of the entry gate 4 may determine if the screening element 5 should be in the open or closed position, when the entry gate 4 is in the respective closed or open position. Thus, when the entry gate 4 is closed as an animal 8 is present in the milking area A, and the screening element 5 is opened by the actuator 6 to allow the robot arm 2 access to the milking area A. When the entry gate 4 is open, no animal 8 is present in the milking area A, and the screening element 5 is closed by the actuator 6 as the robot arm 2 is no longer protruding into the milking area A. The robot arm 2 is then effectively protected from environmental conditions such as wind, dirt or frost.

The gate sensor 10 may be any kind of sensor which may detect the position of the entry gate 4, such as a contact, proximity, infrared or magnetic sensor, or other means such as a switch, micro-switch or relay.

A mechanical coupling between the entry gate 4 and the screening element 5 is also possible, for example through at least one actuator, coupling multiple actuators, use of bar linkages or a pulley system or the like. This way, a gate sensor 10 is unnecessary. Also, a separate actuator 6 is not needed, as the screening element 5 is moved between the open and closed positions directly through the movement of the entry gate 4.

A climate sensor 11 is shown located on the front side of the milking robot 1 where it is exposed to the environmental conditions it measures. The climate sensor 11 can determine a specific environmental parameter, such as temperature, wind speed, precipitation or humidity. In fig. 1 and 2, it is shown to be on the milking robot 1 itself, but it could also be located away from the milking robot 1, for example at a location near the milking robot 1, at another location inside the barn or shelter the milking robot 1 is placed, or even outside said barn or shelter.

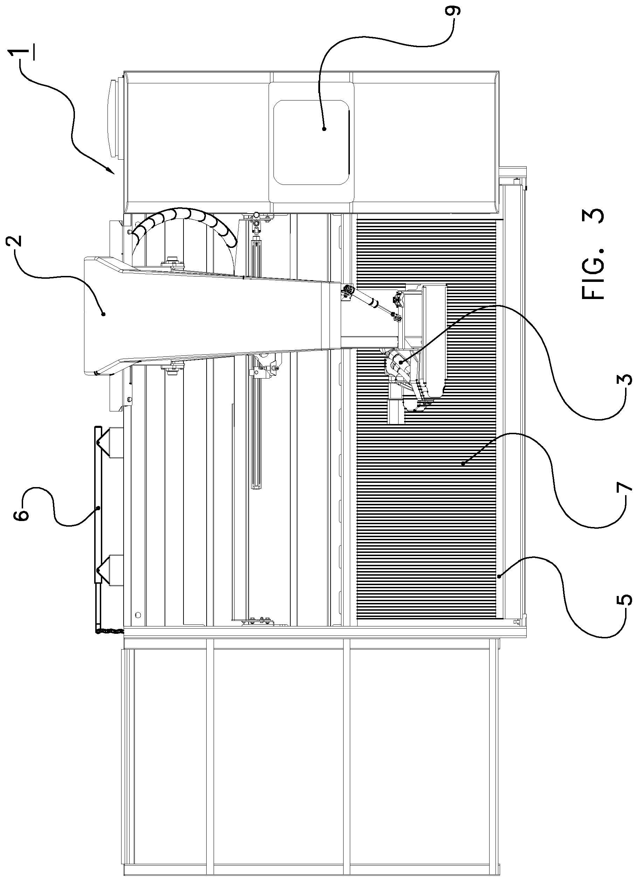

In fig. 3, the back of the milking robot 1 is shown with the screening element 5 in the closed position, moved by the actuator 6. The screening element 5 provided with a screen 7 effectively screens off the area in which the robot arm 2 as it is not in use. A control system 9 controls the movement of the screening element 5 by controlling the actuator 6.

The control system 9 may operate the screening element in several different ways. The control system 9 can be programmed or pre-programmed at the factory to use the screening element 5 for screening off parts of the milking robot 1 during the entire year, or only during specific periods so no more input is necessary. The screening element 5 will be active during the specified period when no animal 8 is present within the milking area A and when no milking operations are performed.

The control system 9 may control the screening element 5 in dependence on the output from the gate sensor 10, which determines if an animal 8 is present and so if milking operations are about to be performed by determining the position of the entry gate 4. When the entry gate 4 is closed, this is a clear indication that the robot arm 2 is about to protrude into the milking area A and start milking operations, and that the screening element 5, if active, should be moved into the open position. When the entry gate 4 is open, no milking operations are to be performed and the control system 9 then determines that the screening element 5 should be screening off the area in which the arm is stored when it is inactive.

The control system 9 may control the screening element 5 in dependence on the output from the climate sensor 11, which measures environmental parameters such as temperature, wind speed, precipitation or humidity. The control system 9 is programmed with threshold values for the measured parameters, and when one or more, whichever is desires, falls below or exceeds the corresponding threshold value, the control system 9 will determine that the screening element 5 should be operational. The period in which the screening element 5 should then be operational can be a predetermined period, or until the climate sensor 11 measures an environmental parameter which falls below or exceeds the corresponding threshold value. The control system 9 determines that the screening off is no longer necessary.

Alternatively, a combination of these manners of operating the screening element 5 by the control system 9 may be used.

By operating the screening element 5 by the control system 9 in dependence on the gate sensor signal and/or the climate sensor signal, a greater longevity of the screening element 5 can be accomplished, as there is less wear on all the parts when the screening element 5 does not have to be operational all through the year. Also, in most parts of the world, it is only necessary to screen off parts of the milking robot 1 for protection during certain periods, as only then the environmental conditions will affect the performance of the milking robot negatively.

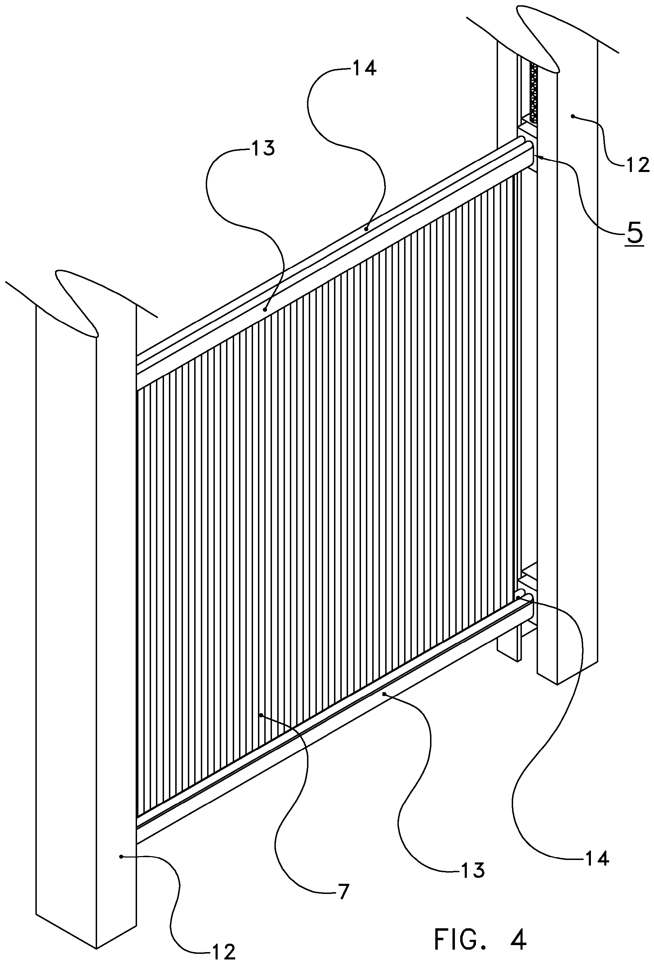

Fig. 4 shows the screening element 5 and its parts in a partly closed position. It shows a roller blind with a screen 7 held by screen rollers 14 held by screen roller holders 13. The screen roller holders are held by screening element guide rails 12. At least one of the screen roller holders 13 is connected to an actuator 6 (not shown) in order for it to move from the open to the closed position and vice versa.

The screen 7 is made of a flexible material which is collected on the screen rollers as the screening element 5 is in the open position. Also, when an animal steps on a part the screening element 5 or in some other way displaces a part of the screening element 5, or when an obstruction is present between the screening element 5 and the frame of the milking robot 1 preventing the screening element 5 from properly opening or closing, the screening element 5 can give slightly, so no parts are permanently deformed. This dampening effect can be achieved by the actuator 6, or springs or the like.

The screening element 5 may be mounted permanently onto the milking robot 1, or alternatively as a separate frame which can be easily removed when the screening element 5 is not necessary.

Also, the screening element 5 may be closed only partially if so desired, for example when the environmental conditions are not severe and do not fall below or exceed the corresponding climate threshold value by a significant margin. This margin may for example be determined in advance by an operator and programmed into the control system 9, or it may be percentile deviation from the threshold value

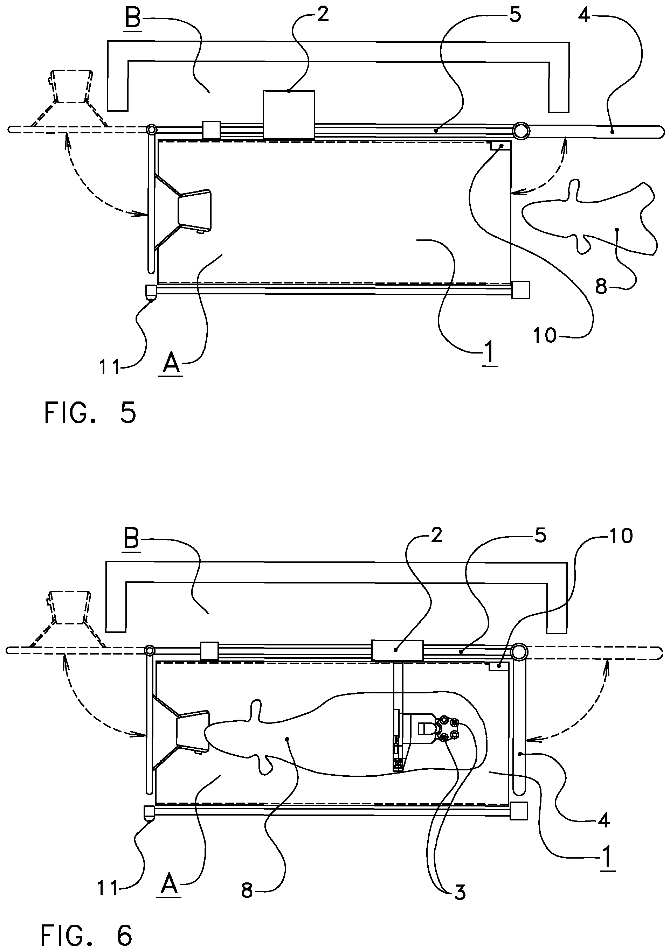

Fig. 5 shows an example of how a milking robot 1 may be placed inside a barn, where it is at least partly shielded by walls. This is an alternative configuration of a milking robot, in which the animal enters the robot at the rear short end, and exits from the front short end. The milking area A is inside the milking robot 1, and the robot arm 2 for attaching the teat cups 3 to the teats of an animal 8 is not protruding into the milking area A but is stored in the arm storage area B. The entry gate 4 is open to allow access to an animal 8 to be milked. The gate sensor 10 senses the position of the entry gate 4, and the climate sensor 11 senses the environmental conditions. The screening element 5 is placed between the milking area A and the arm storage area B in a closed, or at least partially closed position.

Fig. 6 shows an example of how a milking robot 1 may be placed inside a barn, where it is enclosed by walls. This is an alternative configuration of a milking robot, in which the animal enters the robot at the rear short end, and exits from the front short end. The milking area A is inside the milking robot 1, and the robot arm 2 for attaching the teat cups 3 to the teats of an animal 8 is protruding into the milking area A. The entry gate 4 is closed, as an animal 8 is already inside, and access by another animal is not allowed at this point. The gate sensor 10 senses the position of the entry gate 4, and the climate sensor 11 senses the environmental conditions. The screening element 5 is placed between the milking area A and the arm storage area B in an open position to allow the robot arm 2 into the milking area A for attachment of the teat cups 3.

Several examples of operation are given with regard to both fig. 5 and fig. 6, One in which both the gate sensor 10 and the climate sensor 11 are used in conjunction with the control system 9 in order to determine whether the screening element 5 should be in operation or not, and if it should be in the open or closed position when it is in operation, and one without sensors. It should be clear by the description that these sensors can be omitted, and other embodiments which do not need a climate sensor 11 and/or a gate sensor 10 are possible.

The control system 9 receives signals from the climate sensor 11 in order to determine if the environmental conditions dictate that the screening element 5 should be in operation, for example if the temperature falls below zero, the threshold value for this environmental parameter in this example, there is a danger of tubes and conduits on the robot arm 2 freezing up, thereby possibly damaging the milking robot 1. In this case, the control system 9 will decide that the screening element 5 should be operational, and the arm storage area B will be screened off by the screening element 5 when the robot arm 2 is inside the arm storage area B and not protruding into the milking area A. When an animal 8 enters the milking area A through the entry gate 4 and this animal is to be milked, the entry gate 4 closes so no other animals may enter the milking area A. The gate sensor 10 sends a signal to the control system 9 which determines the position of the entry gate 4, and when it is closed, the milking operation is about to start. As such, this is a good time to move the screening element 5 into the open position by the actuator 6 in order to allow the robot arm 2 to move into the milking area A in order to perform the milking operations.

As the milking operations are finished, the robot arm 2 will detach the teat cups 3 and move back out of the milking area A and into the arm storage area B. The animal 8 is then allowed to exit the milking robot 1 through exit gate 15, and as the animal 8 vacates the milking area A, the entry gate 4 is once again opened to allow the next animal access to the milking robot 1. The gate sensor 10 sends a signal to the control system 9 which then determines that the entry gate is in the open position, and as no milking operations will be performed, that the screening element 5 should be moved into the closed position in order to screen off the arm storage area B, and thereby the robot arm 2, from environmental conditions.

The climate sensor 11 will continue to send signals to the control system 9, which determines what the operational state of the screening element 5 should be in dependence on these signals. The period in which the screening element 5 should be operational is dictated by the control system. It can be pre-programmed, for example always for 2 weeks after a certain environmental parameter is measured and falls below or exceeds the corresponding threshold, or the period may be terminated as soon as the measured environmental parameters return into their corresponding acceptable range.

When the screening element 5 is mechanically coupled to the entry gate 4, no sensor is necessary as the screening element 5 is automatically moved when the entry gate 4 moves. This eliminates the need for any sensors, as the screening element 5 will always be in the open position when the entry gate 4 is closed when milking operations are performed on an animal 8 inside the milking area A, and vice versa, the screening element 5 will always be in the closed position when the entry gate 4 is open when no milking operations are performed, thereby effectively screening off the arm storage area B when the robot arm is completely inside the arm storage area B.

## Claims

1. Milking robot (1) comprising a milking area (A) for receiving an animal (8) to be milked, teat cups (3) and a robot arm (2) for attachment of the teat cups (3) to the teats of the animal (8) in said milking area (A), the robot arm (2) being movable between an active position for the attachment of the teat cups (3) to the teats of the animal (8) wherein the robot arm (2) is, at least partly, inside the milking area (A), and an inactive position where the robot arm (2) is outside the milking area (A) in an arm storage area (B), situated behind or to the side of the milking area, wherein the milking robot (1) is further provided with a controllable screening element (5) that is automatically movable between a first open position and a second closed position in which the element (5) screens off the arm storage area (B), with the robot arm no longer protruding into the milking area (A), from the milking area (A) more than in the open position.

2. Milking robot (1) according to claim 1, wherein the controllable screening element (5) comprises an element actuator (6) for moving the element (5)between the first open position and the second closed position and vice versa.

3. Milking robot (1) according to claim 1 or 2, wherein the controllable screening element (5) comprises one of a curtain, a screen or a roller blind.

4. Milking robot (1) according to any one of the preceding claims, comprising a plurality of controllable screening elements (5).

5. Milking robot (1) according to any one of the preceding claims, comprising an entry gate (4) for allowing an animal (8) to enter the milking area (A), wherein the entry gate (4) is operatively connected to the screening element (5) for moving the screening element (5) between the open and closed position in dependence on the position of the entry gate (4).

6. Milking robot (1) according to claim 5, comprising a mechanical coupling between the entry gate (4) and the screening element (5).

7. Milking robot (1) according to any one of claims 2-6, comprising a control system (9) operatively connected to the element actuator (5) and arranged to control the element actuator (6) for movement of the screening element (5).

8. Milking robot (1) according to claim 7, wherein the control system (9) is provided with a gate sensor (10) for generating a gate sensor signal in dependence on a position of the gate (4), and is arranged for controlling the movement of the screening element (5) in dependence on the gate sensor signal.

9. Milking robot (1) according to claim 7 or 8, wherein the control system (9) is provided with a climate sensor (11) for generating a climate signal in dependence on the climate, and is arranged to control the movement of the screening element (5) in dependence on the climate signal.

## Patentansprüche

1. Melkroboter (1), umfassend einen Melkbereich (A) zum Aufnehmen eines zu melkenden Tiers (8), Melkbecher (3) und einen Roboterarm (2) zum Anbringen der Melkbecher (3) an den Zitzen des Tiers (8) in dem Melkbereich (A), wobei der Roboterarm (2) zwischen einer aktiven Position für das Anbringen der Melkbecher (3) an den Zitzen des Tiers (8), in der sich der Roboterarm (2) zumindest teilweise innerhalb des Melkbereichs (A) befindet, und einer inaktiven Position, in der sich der Roboterarm (2) außerhalb des Melkbereichs (A) in einem Armaufbewahrungsbereich (B) befindet, der sich hinter oder seitlich von dem Melkbereich befindet, bewegbar ist, wobei der Melkroboter (1) ferner mit einem steuerbaren Abschirmungselement (5) bereitgestellt ist, das automatisch zwischen einer ersten geöffneten Position und einer zweiten geschlossenen Position, in der das Element (5) den Armaufbewahrungsbereich (B) von dem Melkbereich (A) mehr als in der geöffneten Position abschirmt, wobei der Roboterarm nicht mehr in den Melkbereich (A) ragt, bewegbar ist.

2. Melkroboter (1) nach Anspruch 1, wobei das steuerbare Abschirmungselement (5) eine Elementbetätigung (6) zum Bewegen des Elements (5) zwischen der ersten geöffneten Position und der zweiten geschlossenen Position und umgekehrt umfasst.

3. Melkroboter (1) nach Anspruch 1 oder 2, wobei das steuerbare Abschirmungselement (5) eines eines Vorhangs, einer Abschirmung oder eines Rollos umfasst.

4. Melkroboter (1) nach einem der vorhergehenden Ansprüche, umfassend mehrere steuerbare Abschirmungselemente (5).

5. Melkroboter (1) nach einem der vorhergehenden Ansprüche, umfassend ein Eingangstor (4), um einem Tier (8) zu ermöglichen, in den Melkbereich (A) hinein zu laufen, wobei das Eingangstor (4) mit dem Abschirmungselement (5) wirkgekoppelt ist, um das Abschirmungselement (5) in Abhängigkeit von der Position des Eingangstors (4) zwischen der geöffneten und der geschlossenen Position zu bewegen.

6. Melkroboter (1) nach Anspruch 5, umfassend eine mechanische Kopplung zwischen dem Eingangstor (4) und dem Abschirmungselement (5).

7. Melkroboter (1) nach einem der Ansprüche 2-6, umfassend ein Steuersystem (9), das mit der Elementbetätigung (5) wirkgekoppelt ist und angeordnet ist, die Elementbetätigung (6) zur Bewegung des Abschirmungselements (5) zu steuern.

8. Melkroboter (1) nach Anspruch 7, wobei das Steuersystem (9) mit einem Torsensor (10) zum Erzeugen eines Torsensorsignals in Abhängigkeit von einer Position des Tors (4) bereitgestellt ist und angeordnet ist, die Bewegung des Abschirmungselements (5) in Abhängigkeit von dem Torsensorsignal zu steuern.

9. Melkroboter (1) nach Anspruch 7 oder 8, wobei das Steuersystem (9) mit einem Klimasensor (11) zum Erzeugen eines Klimasignals in Abhängigkeit von dem Klima bereitgestellt ist und angeordnet ist, die Bewegung des Abschirmungselements (5) in Abhängigkeit von dem Klimasignal zu steuern.

## Revendications

1. Robot de traite (1) comprenant une zone de traite (A) pour recevoir un animal (8) à traire, des gobelets trayeurs (3) et un bras de robot (2) pour la fixation des gobelets trayeurs (3) aux trayons de l'animal (8) dans ladite zone de traite (A), le bras de robot (2) étant déplaçable entre une position active pour la fixation des gobelets trayeurs (3) aux trayons de l'animal (8) dans laquelle le bras de robot (2) est situé, au moins partiellement, à l'intérieur de la zone de traite (A), et une position inactive dans laquelle le bras de robot (2) est situé à l'extérieur de la zone de traite (A) dans une région de rangement de bras (B), qui est située derrière ou sur le côté de la zone de traite, dans lequel le robot de traite (1) est en outre pourvu d'un élément de protection commandable (5) qui est déplaçable automatiquement entre une première position ouverte et une seconde position fermée dans laquelle l'élément (5) isole la région de rangement de bras (B), avec le bras de robot qui ne fait plus saillie dans la zone de traite (A), de la zone de traite (A) plus que dans la position ouverte.

2. Robot de traite (1) selon la revendication 1, dans lequel l'élément de protection commandable (5) comprend un actionneur d'élément (6) pour déplacer l'élément (5) entre la première position ouverte et la seconde position fermée, et vice versa.

3. Robot de traite (1) selon la revendication 1 ou 2, dans lequel l'élément de protection commandable (5) comprend un composant parmi un rideau, un écran ou un volet roulant.

4. Robot de traite (1) selon l'une quelconque des revendications précédentes, comprenant une pluralité d'éléments de protection commandables (5).

5. Robot de traite (1) selon l'une quelconque des revendications précédentes, comprenant une porte d'entrée (4) pour permettre à un animal (8) d'entrer dans la zone de traite (A), dans lequel la porte d'entrée (4) est connectée de façon opérationnelle à l'élément de protection (5) afin de déplacer l'élément de protection (5) entre les positions ouverte et fermée en fonction de la position de la porte d'entrée (4).

6. Robot de traite (1) selon la revendication 5, comprenant un couplage mécanique entre la porte d'entrée (4) et l'élément de protection (5).

7. Robot de traite (1) selon l'une quelconque des revendications 2 à 6, comprenant un système de commande (9) qui est connecté de façon opérationnelle à l'actionneur d'élément (5) et qui est agencé de manière à commander l'actionneur d'élément (6) pour déplacer l'élément de protection (5).

8. Robot de traite (1) selon la revendication 7, dans lequel le système de commande (9) est pourvu d'un capteur de porte (10) pour générer un signal de capteur de porte en fonction d'une position de la porte (4), et est agencé de manière à commander le déplacement de l'élément de protection (5) en fonction du signal de capteur de porte.

9. Robot de traite (1) selon la revendication 7 ou 8, dans lequel le système de commande (9) est pourvu d'un capteur climatique (11) pour générer un signal de climat en fonction du climat, et est agencé de manière à commander le déplacement de l'élément de protection (5) en fonction du signal de climat.
